# FASCICULE DE BREVET EUROPEEN

(11) **EP 1 108 636 B1**
(45) Date de publication et mention de la délivrance du brevet: **05.02.2003**
(21) Numéro de dépôt: 00403360.1
(22) Date de dépôt: 30.11.2000
(51) Int. Cl.: B62D 1/10, B60R 21/20

(54) **Ensemble de colonne de direction à coussin central fixe**
Lenksäule mit einem feststehenden Nabenkissen
Steering column assembly with a stationary central pad

(30) Priorité: 16.12.1999 FR 9915908
(43) Date de publication de la demande: 20.06.2001
(73) Titulaire: Faurecia Industries, 92100 Boulogne (FR)
(72) Inventeur: Morel, Jean-Charles, 25200 Montbeliard (FR); Miotte, Robert, 25230 Seloncourt (FR)
(74) Mandataire: Domenego, Bertrand

(56) Documents cités:
- EP-A- 0 825 089
- US-A- 4 422 344
- US-A- 4 598 603

## Description

La présente invention concerne un ensemble de colonne de direction pour véhicule automobile, du type comprenant un arbre de direction s'étendant suivant une direction longitudinale et comprenant un tronçon avant et un tronçon arrière, un mécanisme à engrenages pour transmettre au tronçon avant un mouvement de rotation du tronçon arrière produit par un volant de direction, un bloc fixe de montage d'un coussin central pour le maintenir fixe en rotation lorsque l'arbre de direction tourne, le mécanisme à engrenages comprenant un organe denté intermédiaire engrènant avec un organe denté avant du tronçon avant d'arbre de direction et avec un organe denté arrière du tronçon arrière d'arbre de direction, l'ensemble de colonne de direction comprenant en outre des moyens de maintien radial de l'organe denté intermédiaire contre les dents des organes dentés avant et arrière, ces moyens de maintien comprenant un organe de rappel.

Un ensemble de colonne du type précité permet un entraînement en rotation de l'arbre de direction par le volant tout en maintenant fixe le coussin disposé au centre du volant.

Un tel coussin central fixe regroupe en général plusieurs accessoires, parmi lesquels un sac gonflable de sécurité, un commutateur de commande d'avertisseur sonore ainsi que d'autres organes de commande de différents équipements du véhicule.

Un ensemble du type précité est connu par exemple du document EP-825 089. Dans ce document, les organes dentés avant et arrière sont des pignons coaxiaux et centrés sur l'axe de l'arbre de direction. L'organe denté intermédiaire est un manchon excentré par rapport à l'axe de l'arbre de direction, qui est denté intérieurement et qui entoure extérieurement les organes dentés avant et arrière. Les moyens de maintien du manchon denté contre les pignons avant et arrière comprennent un ressort transversal agissant par l'intermédiaire d'un basculeur contre le manchon denté intermédiaire pour le plaquer contre les pignons avant et arrière. Ces moyens de maintien permettent de rattraper les jeux radiaux entre les pignons avant et arrière et le manchon denté.

La structure de cet ensemble de colonne de direction conduit à un encombrement radial relativement important.

Un but de l'invention est de résoudre ce problème en fournissant un ensemble du type précité, qui puisse être d'encombrement radial plus réduit et qui permette de rattraper de manière satisfaisante les jeux entre l'organe denté intermédiaire et les organes dentés avant et arrière.

A cet effet, l'invention a pour objet un ensemble de colonne de direction du type précité, caractérisé en ce que les moyens de maintien comprennent un mécanisme à surfaces de rampe pour transformer une composante longitudinale d'une force produite par l'organe de rappel en une force radiale de rappel de l'organe denté intermédiaire contre les organes dentés avant et arrière.

Selon des modes particuliers de réalisation, l'ensemble peut comprendre l'une ou plusieurs des caractéristiques suivantes, prise(s) isolément ou selon toutes les combinaisons techniquement possibles :
- le mécanisme à surfaces de rampe comprend un support de l'organe denté intermédiaire reçu de manière mobile radialement par rapport au bloc fixe,
- ledit mécanisme à surfaces de rampe présente une paire de premières surfaces de rampe situées chacune à une extrémité du support de l'organe denté intermédiaire, et inclinées par rapport à la direction longitudinale de manière opposée, le bloc fixe présentant une paire de deuxièmes surfaces de rampe inclinées par rapport à la direction longitudinale de manière opposée et en contact chacune avec une première surface de rampe, et les surfaces de rampe d'une des paires de surfaces de rampe sont mobiles longitudinalement l'une par rapport à l'autre sous l'action de l'organe de rappel,
- le mécanisme à surfaces de rampe comprend une butée de limitation du déplacement longitudinal relatif desdites surfaces de rampe dans le sens correspondant à un éloignement de l'organe denté intermédiaire des dents des organes dentés avant et arrière,
- l'organe de rappel prend appui sur au moins une pièce portant une des surfaces de rampe mobiles l'une par rapport à l'autre,
- les surfaces de rampe mobiles l'une par rapport à l'autre sont les premières surfaces de rampe, et le support de l'organe denté intermédiaire comprend au moins deux parties mobiles longitudinalement l'une par rapport à l'autre, qui portent chacune l'une des premières surfaces de rampe et sur lesquelles l'organe de rappel prend appui,
- les surfaces de rampe mobiles l'une par rapport à l'autre sont les deuxièmes surfaces de rampe, et une des deuxièmes surfaces de rampe est portée par un poussoir du bloc fixe, le poussoir étant mobile longitudinalement sous l'action de l'organe de rappel,
- l'organe de rappel est un ressort de compression disposé longitudinalement, et
- les organes dentés avant et arrière comprennent des manchons dentés intérieurement, et l'organe denté intermédiaire est un pignon disposé à l'intérieur des organes dentés avant et arrière et engrènant avec ceux-ci.

L'invention sera mieux comprise à la lecture de la description qui va suivre, donnée uniquement à titre d'exemple, et faite en se référant aux dessins annexés, sur lesquels :
- la figure 1 est une vue schématique, partielle et en coupe longitudinale d'un ensemble de colonne de direction selon l'invention,
- les figures 2 et 3 sont des vues schématiques en perspective, prises suivant des directions différentes, de la coquille de support du coussin central fixe de l'ensemble de la figure 1,
- la figure 4 est une vue schématique latérale illustrant le verrouillage de cette coquille dans l'ensemble de la figure 1,
- la figure 5 est une vue analogue à la figure 4 illustrant le montage de la coquille,
- la figure 6 est une vue analogue à la figure 1, agrandie et illustrant une variante de l'ensemble de la figure 1, et
- la figure 7 est une vue analogue à la figure 2 illustrant une variante de la coquille de support du coussin central fixe.

Dans tout ce qui suit les termes « avant » et « arrière » s'entendent par rapport à la position d'un conducteur.

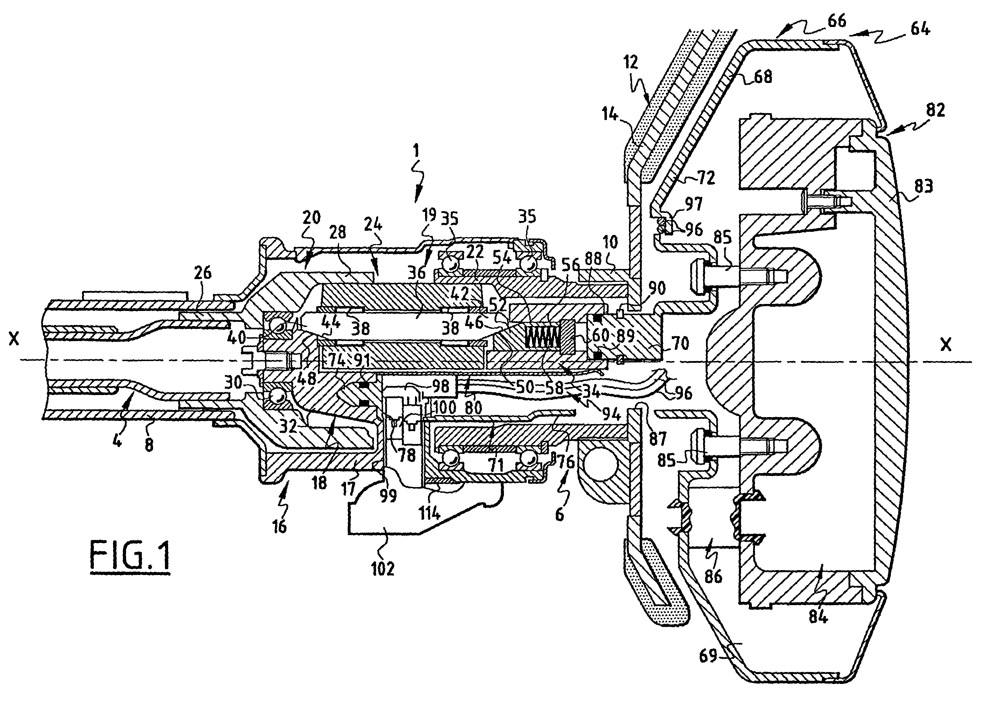

La figure 1 illustre un ensemble de colonne de direction 1 d'un véhicule automobile qui comprend un arbre de direction d'axe longitudinal X-X. L'arbre de direction comprend lui-même un tronçon avant 4 (à gauche sur la figure 1) et un tronçon arrière 6.

Le tronçon avant 4, qui peut être par exemple réalisé en plusieurs parties comme représenté sur la figure 1, est reçu de manière connue à rotation dans un corps de colonne de direction 8 porté par la structure du véhicule automobile.

Le tronçon arrière 6 de l'arbre de direction est relié de manière fixe en rotation au moyeu 10 d'un volant de direction 12 de manière classique, par exemple par blocage radial au moyen d'une vis conique. Ce volant 12 comprend une jante annulaire (non représentée) reliée rigidement au moyeu 10 par plusieurs branches 14 réparties angulairement autour de celui-ci.

L'ensemble de colonne de direction 1 comprend en outre un bloc ou corps fixe 16 disposé entre les tronçons avant 4 et arrière 6 de l'arbre de direction. Le corps fixe 16 comprend une enveloppe ou jupe extérieure 17 de forme générale cylindrique d'axe X-X, et un noyau central 18 relié rigidement à la jupe 17. Ce corps 16 est relié rigidement au reste de la structure du véhicule par sa jupe 17 de manière à rester fixe lorsque l'arbre de direction tourne sous l'action du volant de direction 12.

L'ensemble 1 comprend en outre un mécanisme à engrenages 19 pour transmettre un mouvement de rotation du tronçon arrière 6 de l'arbre de direction vers le tronçon avant 4. Ce mécanisme 19 comprend un organe denté avant 20 sous forme d'une cloche, un organe denté arrière 22 et un organe denté intermédiaire 24 sous forme d'un pignon allongé.

L'extrémité avant 26 de la cloche 20 est solidaire en rotation de l'extrémité arrière du tronçon avant 4 de l'arbre de direction.

L'extrémité arrière 28 de la cloche 20 forme un manchon denté intérieurement. La cloche 20 est centrée sur l'axe X-X et montée à rotation, par exemple par un roulement à billes 30, sur l'extrémité avant 32 du noyau, central 18 du corps fixe 16, cette extrémité avant 32 étant reçue à l'intérieur du manchon denté 28 de la cloche 20.

Le tronçon arrière 6 de l'arbre de direction est un manchon entourant l'extrémité arrière 34 du noyau 18 du corps fixe 16 et reçu dans l'extrémité arrière de la jupe 17 du corps fixe 16. Deux roulements à billes 35 sont interposés entre la paroi extérieure du tronçon arrière 6 de l'arbre de direction et la paroi intérieure de la jupe 17, pour permettre au tronçon arrière 6 de tourner autour de l'axe X-X par rapport au corps 16 et de bloquer axialement ce tronçon arrière 6 par rapport au corps fixe 16.

L'organe denté arrière 22 est formé par l'extrémité avant du tronçon arrière 6 de l'arbre de direction qui est dentée intérieurement.

Le pignon intermédiaire 24 s'étend de l'avant vers l'arrière depuis l'intérieur du manchon denté avant 28 jusqu'à l'intérieur du manchon denté arrière 22.

Ce pignon 24 est monté sur le noyau 18 par l'intermédiaire d'une tige de support 36 longitudinale disposée à l'intérieur du pignon intermédiaire 24. Deux roulements à aiguilles 38 sont par exemple interposés entre le pignon 24 et la tige 36. La tige 36 et le pignon 24 peuvent se déplacer radialement par rapport au noyau 18.

Les extrémités avant 40 et arrière 42 de la tige 36 font saillie longitudinalement vers l'extérieur du pignon intermédiaire 24. Chacune de ces extrémités présente une première surface de rampe, respectivement 44 et 46. Les deux premières surfaces de rampe 44 et 46 sont inclinées de manière opposée par rapport à l'axe longitudinal X-X, par exemple d'un angle d'environ 20° et plus généralement compris entre 10° et 40°. Ainsi, la première surface de rampe avant 44 est inclinée radialement vers l'extérieur et vers l'avant, et la première surface de rampe arrière 46 est inclinée radialement vers l'extérieur et vers l'arrière.

Les premières surfaces de rampe 44 et 46 prennent appui respectivement sur des deuxièmes surfaces de rampe 48 et 50 inclinées de manière correspondante.

La deuxième surface de rampe avant 48, qui coopère avec la première surface de rampe avant 44 de la tige 36, est ménagée dans l'extrémité avant 32 du noyau 18. La deuxième surface de rampe arrière 50, qui coopère avec la première surface de rampe arrière 46 de la tige 36, est ménagée à l'avant d'un poussoir 52 reçu dans un alésage longitudinal 54 qui est étagé, traversant et ménagé dans l'extrémité arrière 34 du noyau 18 du corps fixe 16.

Le poussoir 52 peut coulisser axialement dans l'alésage 54. Un orifice axial borgne 56 est ménagé à l'arrière du poussoir 52 et reçoit un ressort hélicoïdal de rappel 58 qui prend appui sur le fond de l'orifice 56 et sur une vis 60 vissée dans l'alésage 54 taraudé à l'arrière du poussoir 52. Le ressort 58 rappelle donc le poussoir 52 vers l'avant de l'ensemble de colonne de direction 1.

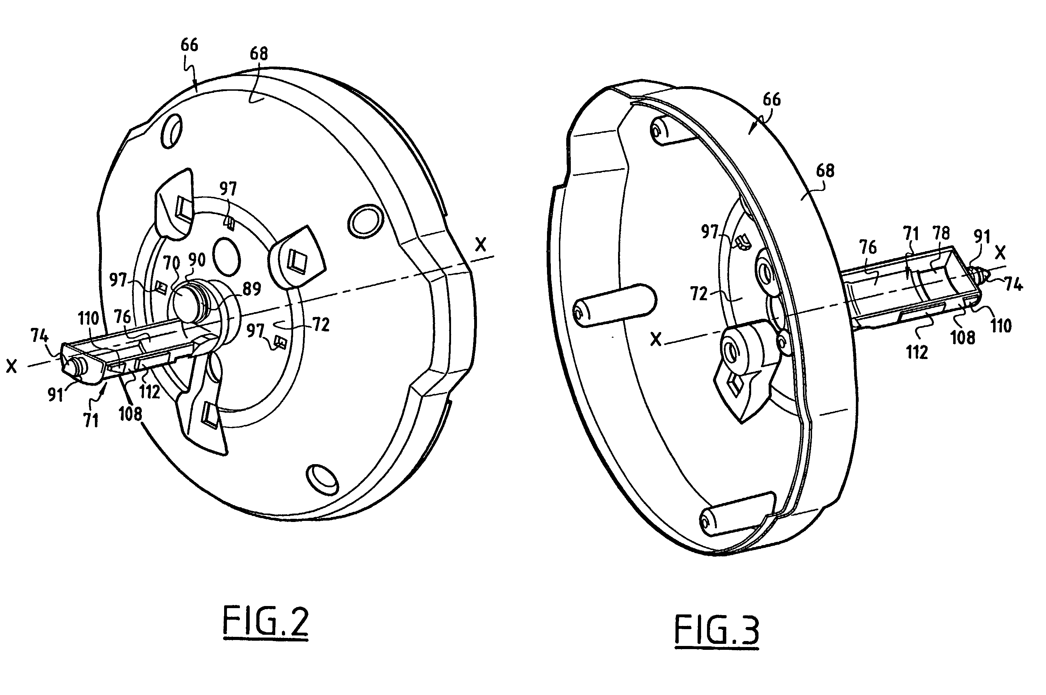

L'ensemble de colonne de direction 1 comprend en outre, au centre du volant 12, un coussin central fixe 64 qui comprend une coquille de support monobloc 66 (figures 1 à 3) réalisée par exemple d'une seule pièce en matière plastique chargée de fibres de verre ou en aluminium ou en magnésium.

Cette coquille 66 comprend une coupelle arrière 68 de forme générale concave, centrée sur l'axe X-X. Cette coquille 66, de concavité dirigée vers l'arrière, définit un logement arrière 69. La coquille 66 est prolongée vers l'avant par un pion cylindrique 70 et une fiche ou queue 71 qui s'étendent parallèlement à l'axe X-X.

Le pion 70 a une longueur nettement plus faible que la fiche 71. La fiche 71 a une section courante en U. Elle est ouverte sur toute sa longueur vers le haut, débouche à l'arrière dans le fond 72 de la coupelle 68 et est fermée à l'avant par une cloison transversale prolongée par une pointe conique de centrage 74. Le pion 70 et la fiche 71 sont excentrés par rapport à l'axe X-X et sont décalés angulairement d'environ 180° autour de cet axe.

Le fond 76 de la fiche 71 présente une ouverture avant 78 sensiblement rectangulaire.

La section transversale de la fiche 71 est fermée par une lame élastique supérieure 80, visible sur la figure 1, et rapportée par encliquetage sur la fiche 71. Ainsi, la lame 80 est fixée rigidement à l'extrémité avant de la fiche 71, son extrémité arrière 81 étant mobile radialement par déformation élastique de la lame 80.

Le coussin central fixe 64 comprend en outre un couvercle arrière 82, par exemple réalisé en plusieurs parties dont une partie centrale 83 et une couronne extérieure comme représenté sur la figure 1. Le coussin central 64 renferme dans le logement 69 un module à sac gonflable de sécurité 84, monté flottant sur le fond 72 de la coupelle 68 par des vis 85 passant dans le fond 72 de la coupelle 68, un commutateur 86 de commande d'avertisseur sonore et éventuellement d'autres accessoires et organes classiques de commande d'équipements du véhicule.

Le pion 70 est reçu, au travers d'un orifice central 87 du moyeu 10, dans le tronçon arrière 88 de l'alésage 54 de l'extrémité arrière 34 du noyau 18 du corps fixe 16. Le pion 70 porte un joint torique 89 engagé également dans le tronçon arrière 88 de l'alésage 54 pour rattraper les jeux. Un circlips 90 est disposé à l'extérieur de l'alésage 54 dans une gorge annulaire ménagée dans le pion 70. Ce circlips 90 est destiné à venir en butée contre le moyeu 10 du volant 12 pour limiter les mouvements vers l'arrière de la coquille 66 suite au déploiement du sac gonflable de sécurité.

La fiche 71 est reçue, au travers de l'orifice central 87 du moyeu 10, dans un évidement longitudinal de forme correspondante du noyau 18 du corps fixe 16. En particulier, la pointe 74 est reçue dans une cavité de forme correspondante. La pointe 74 porte également un joint torique 91 de rattrapage des jeux.

Le pion 70 et la fiche 71 assurent le centrage radial et le positionnement angulaire relatif du coussin central 64 et du corps fixe 16.

L'extrémité mobile 81 de la lame élastique 80 prend appui sur l'extrémité arrière 34 du noyau 18 du corps fixe 16 en assurant ainsi une limitation des jeux radiaux entre le coussin central fixe 64 et le corps fixe 16. De plus, cette lame 80, du fait de sa largeur, comme vu perpendiculairement au plan de la figure 1, contribue avec le pion 70 et la fiche 71 au centrage et au positionnement angulaire relatif sans jeu du coussin central 64 par rapport au corps fixe 16.

La fiche 71 et la lame 80 définissent intérieurement un passage axial 94 pour un faisceau de conducteurs électriques 96 issus des différents organes de commande du coussin central fixe 64, notamment du commutateur 86 de commande d'avertisseur sonore.

On notera que des pattes de maintien 97 formées par découpage et déformation de la coupelle 68 permettent de plaquer certains de ces conducteurs 96 contre la cuvette 68 dans le logement 69 pour les guider. Le faisceau de conducteurs 96 est terminé à l'avant par un connecteur femelle 98 orienté radialement vers l'extérieur en regard de l'ouverture 78 de la fiche 71. Cette ouverture 78 débouche dans un passage radial 99 ménagé dans le corps 16 entre le noyau 18 et la jupe 17 du corps fixe 16. Un connecteur mâle 100, complémentaire du connecteur femelle 99, est reçu dans ce passage radial 99 pour relier les conducteurs électriques 96 aux équipements correspondants du véhicule.

De manière classique, ce connecteur mâle 100 est verrouillable en position par un levier pivotant 102, qui dans sa position de verrouillage représentée sur la figure 1, est plaqué contre la partie inférieure arrière de la jupe 17 du corps fixe 16.

On notera que sur la figure 1, les connecteurs 98 et 100 et le levier 102 n'ont pas été représentés en coupe.

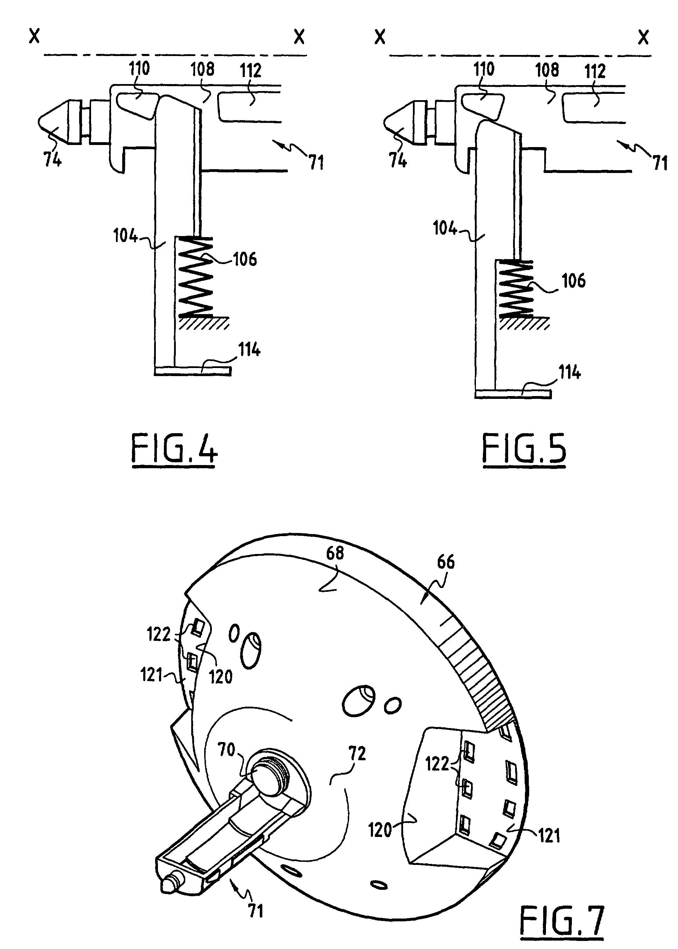

Comme illustré par la figure 4, le corps fixe 16 comprend de chaque côté de la fiche 71 un pêne 104 mobile transversalement et sollicité vers l'intérieur du noyau 18 par un ressort 106. Ces pênes 104 sont engagés chacun dans une gâche 108 ménagée entre un relief avant 110 de blocage formant rampe de dégagement du pêne 104, et un relief arrière 112 de blocage. La fiche 71 présente de tels reliefs 110 et 112 sur ses deux côtés. Les pênes 104 sont prolongés à leur extrémité inférieure par une partie commune de saisie 114 disposée à l'extérieur de la jupe 17 du corps fixe 16, entre cette jupe 17 et le levier 102 du connecteur mâle 100 lorsqu'il est dans sa position de verrouillage. Les pênes 104 engagés dans les gâches 108 permettent d'assurer un verrouillage axial du coussin central fixe 64 par rapport au corps fixe 16.

Ainsi, le coussin central fixe 64 et le corps fixe 16 sont solidaires l'un de l'autre avec un rattrapage des jeux satisfaisant.

Lorsque le conducteur fait pivoter le volant 12 autour de l'axe X-X, ce dernier entraîne par l'intermédiaire du moyeu 10 le tronçon arrière 6 de l'arbre de direction en rotation autour de l'axe longitudinal X-X. Le manchon denté arrière 22 qui engrène avec le pignon intermédiaire 24 entraîne ce dernier en rotation autour de la tige excentrée 36. Le pignon intermédiaire 24 qui engrène également avec le manchon denté avant 28 entraîne alors ce dernier en rotation. Le manchon 28 étant solidaire en rotation du tronçon avant 4 de l'arbre de direction, le mouvement de rotation du volant 12 est transmis par le mécanisme d'engrenages 19 au tronçon avant 4 de l'arbre de direction.

On conçoit que, du fait de sa structure, l'encombrement radial de ce mécanisme d'engrenages 19 et donc de l'ensemble de colonne de direction 1 est relativement réduit.

Les premières surfaces de rampe 44 et 46, les deuxièmes surfaces de rampe 48 et 50 ainsi que le ressort de rappel 58 permettent de rattraper les jeux radiaux entre les dents du pignon intermédiaire 24 et les dents du manchon avant 28 et du manchon arrière 22.

En effet, le ressort 58 exerce une force axiale dirigée vers l'avant sur le poussoir 52. Du fait de l'inclinaison des surfaces de rampe arrière 46 et 50 et des surfaces de rampe avant 44 et 48, cette force longitudinale est transformée en une force radiale de rappel tendant à déplacer le pignon 24 radialement vers l'extérieur et donc à le plaquer contre les manchons dentés avant 28 et arrière 22. Un léger espacement longitudinal entre l'extrémité arrière du poussoir 52 et la vis 60 permet un léger déplacement vers l'arrière du poussoir 52 et donc un léger déplacement radialement vers l'intérieur du pignon 24, contre l'action du ressort 58. Cette caractéristique permet d'absorber les légers défauts de fabrication du pignon intermédiaire 24 et des manchons dentés avant 28 et arrière 22.

La vis 60 permet de régler l'amplitude de cette possibilité de déplacement radial du pignon 24.

L'utilisation de surfaces de rampe 44, 46, 48 et 50, qui transforment une force longitudinale de rappel en une force radiale de rappel, permet de disposer le ressort 58 longitudinalement dans l'ensemble de colonne de direction 1. Cela contribue également à réduire l'encombrement radial de cet ensemble 1, de manière indépendante de la nature du mécanisme à engrenages 19.

Par ailleurs, ces surfaces de rampe 44, 46, 48 et 50 permettent d'utiliser un ressort 58 moins puissant et donc moins encombrant qu'un ressort radial, puisque le ressort axial 58 n'a à compenser que la composante axiale de la force de contact de la tige 36 sur le poussoir 52.

Enfin, de tels mécanismes de maintien des pignons 24 contre les dents des manchons avant 28 et arrière 22 sont moins sensibles au vieillissement que des paliers caoutchoutés sur lesquels la tige 36 serait montée.

De tels moyens de maintien peuvent être utilisés avec d'autres types de mécanisme à engrenages 19.

Par ailleurs, la structure de la coquille 66 permet de réduire les coûts de fabrication et de montage du coussin central fixe 64.

On conçoit en effet qu'une telle coquille 66 qui assure à la fois le positionnement axial et angulaire du coussin central fixe 64 par rapport au corps fixe 16 dans le noyau 18, mais également son verrouillage et le guidage axial des conducteurs électriques 96, est relativement économique.

Par ailleurs, pour venir monter le volant 12 et le coussin fixe 64 sur le reste de l'ensemble de colonne de direction 1, il suffit de procéder par exemple comme suit, le coussin central ayant été préalablement assemblé notamment avec le faisceau de conducteurs 96 et le connecteur femelle 98 disposés dans la fiche 71.

On fait tout d'abord passer le pion 70 et la fiche 71 de la coquille 66 dans l'orifice central 87 du moyeu 10. Ensuite, on vient placer le circlips 90 sur le pion 70.

On vient alors enfoncer ce pion 70 dans le tronçon arrière 88 de l'alésage 54 et la fiche 71 et la pointe 74 dans l'évidement et la cavité correspondante du noyau 18. Au cours de cet enfoncement, les reliefs extérieurs avant 110 de la fiche 71 provoquent le déplacement vers le bas des pênes 104 par effet de rampe comme illustré par la figure 5. Au cours de ce déplacement vers le bas des pênes 104, les ressorts 106 sont comprimés.

Lorsque le déplacement vers l'avant de la fiche 71 se poursuit, les pênes 104 sont ensuite rappelés dans les gâches 108 par les ressorts 106 si bien que le corps fixe 16 et le coussin central 64 sont verrouillés axialement. Le positionnement radial et angulaire relatif du corps fixe 16 et du coussin central 64 est obtenu automatiquement grâce au pion 70 et à la fiche 71.

Ensuite, on vient fixer radialement le moyeu 10 sur l'extrémité arrière du tronçon arrière 6 de l'arbre de direction.

Ainsi, le montage du coussin central fixe 64 est relativement simple notamment grâce au verrouillage par encliquetage de la fiche 71 dans le corps fixe 16.

Ensuite, on vient introduire le connecteur mâle 100 dans le passage radial 98 pour le connecter au connecteur femelle 98, puis on le verrouille en position grâce au levier 102.

Pour démonter le coussin central fixe 64, il est nécessaire de déverrouiller le connecteur mâle 100 pour pouvoir accéder à la partie de saisie 114. Le connecteur 100 ayant été retiré, on tire alors cette partie de saisie 114 vers le bas et ce qui provoque le retrait des pênes 104 des gâches 108 contre l'action des ressorts 106.

Il est alors possible de retirer axialement le coussin central fixe 64 et le volant 12 du reste de l'ensemble de colonne de direction 1.

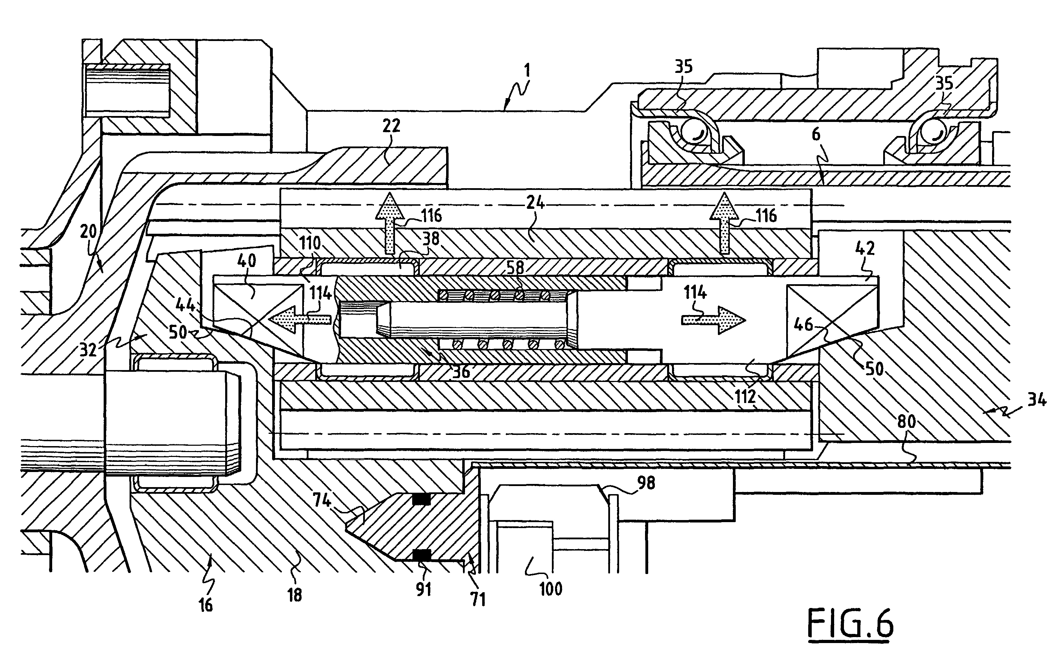

Selon la variante de la figure 6, les deuxièmes surfaces de rampe 48 et 50 sont fixes et ménagées toutes les deux dans le noyau central 18 du corps fixe 16. La tige 36 comprend alors une partie avant 110 et une partie arrière 112 coulissant télécopisquement l'une dans l'autre, le ressort 58 de rappel est alors disposé entre ces deux parties 110 et 112 et prend appui sur celles-ci. Comme illustré par les flèches 114, ce ressort 58 tend à provoquer l'écartement longitudinal des premières surfaces de rampe 44 et 46, ce qui induit des efforts radiaux 116 dirigés vers l'extérieur sur le pignon intermédiaire 24 pour rattraper les jeux.

La figure 6 illustre une variante de la coquille 66 des figures 1 à 4 dans laquelle la coupelle 68 délimite deux logements latéraux 120 de concavités dirigées vers l'avant et vers les côtés. Ces évidements sont destinés à recevoir des organes de commande d'équipements du véhicule automobile. Les parois arrières 121 de ces évidements sont munies d'ouvertures 122 permettant le montage par encliquetage de tels organes de commande, comme des touches par exemple.

## Revendications

1. Ensemble de colonne de direction (1), du type comprenant un arbre de direction s'étendant suivant une direction longitudinale (X-X) et comprenant un tronçon avant (4) et un tronçon arrière (6), un mécanisme à engrenages (19) pour transmettre au tronçon avant (4) un mouvement de rotation du tronçon arrière (6) produit par un volant de direction (12), un bloc fixe (16) de montage d'un coussin central (64) pour le maintenir fixe en rotation lorsque l'arbre de direction tourne, le mécanisme à engrenages comprenant un organe denté intermédiaire (24) engrènant avec un organe denté avant (20) du tronçon avant (4) d'arbre de direction et avec un organe denté arrière (22) du tronçon arrière (6) d'arbre de direction, l'ensemble de colonne de direction comprenant en outre des moyens de maintien radial de l'organe denté intermédiaire (24) contre les dents des organes dentés avant et arrière (20, 22), ces moyens de maintien comprenant un organe de rappel (58), **caractérisé en ce que** les moyens de maintien comprennent un mécanisme à surfaces de rampe (44, 46, 48, 50) pour transformer une composante longitudinale d'une force produite par l'organe de rappel en une force radiale de rappel de l'organe denté intermédiaire (24) contre les organes dentés avant (20) et arrière (22).

2. Ensemble selon la revendication 1, **caractérisé en ce que** le mécanisme à surfaces de rampe comprend un support (36) de l'organe denté intermédiaire (24) reçu de manière mobile radialement par rapport au bloc fixe (16).

3. Ensemble selon la revendication 2, **caractérisé en ce que** ledit mécanisme à surfaces de rampe présente une paire de premières surfaces de rampe (44, 46) situées chacune à une extrémité du support (36) de l'organe denté intermédiaire, et inclinées par rapport à la direction longitudinale de manière opposée, le bloc fixe présentant une paire de deuxièmes surfaces de rampe (48, 50) inclinées par rapport à la direction longitudinale de manière opposée et en contact chacune avec une première surface de rampe (44, 46), et **en ce que** les surfaces de rampe (44, 46 ; 48, 50) d'une des paires de surfaces de rampe sont mobiles longitudinalement l'une par rapport à l'autre sous l'action de l'organe de rappel.

4. Ensemble selon la revendication 3, **caractérisé en ce que** le mécanisme à surfaces de rampe comprend une butée (60) de limitation du déplacement longitudinal relatif desdites surfaces de rampe dans le sens correspondant à un éloignement de l'organe denté intermédiaire (24) des dents des organes dentés avant (20) et arrière (22).

5. Ensemble selon la revendication 3 ou 4, **caractérisé en ce que** l'organe de rappel (58) prend appui sur au moins une pièce (52 ; 110, 112) portant une des surfaces de rampe mobiles l'une par rapport à l'autre.

6. Ensemble selon la revendication 5, **caractérisé en ce que** les surfaces de rampe mobiles l'une par rapport à l'autre sont les premières surfaces de rampe (44, 46), et **en ce que** le support (36) de l'organe denté intermédiaire comprend au moins deux parties mobiles (110, 112) longitudinalement l'une par rapport à l'autre, qui portent chacune l'une des premières surfaces de rampe et sur lesquelles l'organe de rappel (58) prend appui.

7. Ensemble selon la revendication 5, **caractérisé en ce que** les surfaces de rampe mobiles l'une par rapport à l'autre sont les deuxièmes surfaces de rampe (48, 50), et **en ce qu'**une des deuxièmes surfaces de rampe (50) est portée par un poussoir (52) du bloc fixe (16), le poussoir étant mobile longitudinalement sous l'action de l'organe de rappel (58).

8. Ensemble selon l'une quelconque des revendications 1 à 7 **caractérisé en ce que** l'organe de rappel est un ressort de compression (58) disposé longitudinalement.

9. Ensemble selon l'une quelconque des revendications 1 à 8, **caractérisé en ce que** les organes dentés avant et arrière comprennent des manchons (22, 28) dentés intérieurement, et **en ce que** l'organe denté intermédiaire est un pignon (24) disposé à l'intérieur des organes dentés avant et arrière et engrènant avec ceux-ci.

## Patentansprüche

1. Lenksäule (1) einer Art, welche aufweist: eine Lenkspindel, die in einer Längsrichtung (X-X) verläuft und einen vorderen Abschnitt (4) und einen hinteren Abschnitt (6) und einen Getriebemechanismus (19) aufweist, um die Drehbewegung des hinteren Abschnittes (6) auf den vorderen Abschnitt (4) zu übertragen, welche durch ein Lenkrad (12) erzeugt worden ist, sowie einen feststehenden Block (16) für die Montage eines zentralen Polsterteils (64), um es drehfest zu halten, wenn sich die Lenkspindel dreht, wobei der Getriebemechanismus ein verzahntes Zwischenelement (24) aufweist, welches mit einem vorderen verzahnten Element (20) des vorderen Abschnittes (4) der Lenkspindel und mit einem hinteren verzahnten Element (22) des hinteren Abschnitts (6) der Lenkspindel in Eingriff ist, wobei die Lenksäule außerdem Mittel zum Halten des verzahnten Zwischenelementes (24) radial gegen die Verzahnungen des vorderen und des hinteren verzahnten Elements (20, 22) aufweist, wobei diese Haltemittel ein Rückstellorgan aufweisen,
**dadurch gekennzeichnet, dass**
diese Haltemittel einen Mechanismus mit Rampenflächen (44, 46, 48, 50) aufweisen, um eine Längskomponente einer Kraft, welche von dem Rückstellorgan erzeugt wird, in eine radiale Rückstellkraft auf das verzahnte Zwischenorgan (24) gegen das vordere (20) und das hintere (22) verzahnte Element umzuwandeln.

2. Lenksäule nach Anspruch 1,
**dadurch gekennzeichnet, dass**
der Mechanismus mit Rampenflächen eine Halterung (36) für das verzahnte Zwischenelement (24) aufweist, welche radial beweglich gegenüber dem feststehenden Block (16) angeordnet ist.

3. Lenksäule nach Anspruch 2,
**dadurch gekennzeichnet, dass**
der Mechanismus mit den Rampenflächen ein Paar erster Rampenflächen (44, 46) aufweist, die an einem jeweiligen Ende der Halterung (36) des verzahnten Zwischenelementes angeordnet und bezüglich der Längsrichtung entgegengesetzt geneigt sind, wobei der feststehende Block ein Paar zweiter Rampenflächen (48, 50) aufweist, die bezüglich der Längsrichtung entgegengesetzt geneigt sind und mit einer jeweiligen ersten Rampenfläche (44, 46) in Berührung stehen, und dadurch, dass die Rampenflächen (44, 46; 48, 50) eines der beiden Paare von Rampenflächen unter der Wirkung des Rückstellorgans in der Längsrichtung gegen die anderen verschoben werden können.

4. Lenksäule nach Anspruch 3,
**dadurch gekennzeichnet, dass**
der Mechanismus mit den Rampenflächen ein Widerlager (60) für die Begrenzung der relativen Längsverschiebung dieser Rampenflächen in der Richtung enthält, welche einer Entfernung des verzahnten Zwischenelementes (24) von den Verzahnungen des vorderen und des hinteren verzahnten Elements (20) und (22) entspricht.

5. Lenksäule nach Anspruch 3 oder 4,
**dadurch gekennzeichnet, dass**
das Rückstellorgan (58) mindestens an einem Teil (52; 110, 112) anliegt, welches eine der Rampenflächen gegen die andere beweglich trägt.

6. Lenksäule nach Anspruch 5,
**dadurch gekennzeichnet, dass**
die gegeneinander beweglichen Rampenflächen die ersten Rampenflächen (44, 46) sind, und dadurch, dass die Halterung (36) des verzahnten Zwischenelementes mindestens zwei in Längsrichtung gegeneinander bewegliche Teile (110, 112) aufweist, die jeweils eine der ersten Rampenflächen tragen und an denen das Rückstellorgan (58) anliegt.

7. Lenksäule nach Anspruch 5,
**dadurch gekennzeichnet, dass**
die gegeneinander beweglichen Rampenflächen die zweiten Rampenflächen (48, 50) sind und dadurch, dass eine der zweiten Rampenflächen (50) von einem Drückteil (52) des feststehenden Blockes (16) getragen wird, wobei das Drückteil unter der Wirkung des Rückstellorgans (58) in der Längsrichtung verschoben werden kann.

8. Lenksäule nach einem der Ansprüche 1 bis 7,
**dadurch gekennzeichnet, dass**
das Rückstellorgan aus einer in Längsrichtung angeordneten Druckfeder (58) besteht.

9. Lenksäule nach einem der Ansprüche 1 bis 8,
**dadurch gekennzeichnet, dass**
das hintere und das vordere verzahnte Element Muffen (22, 28) mit einer inneren Verzahnung aufweisen und dadurch, dass das verzahnte Zwischenelement ein Zahnrad (24) ist, das im Innern des vorderen und des hinteren verzahnten Elements angeordnet ist und mit diesen im Eingriff steht.

## Claims

1. Steering column assembly (1), of the type comprising a steering shaft extending according to a longitudinal direction (X-X) and having a front section (4) and a rear section (6), a gear mechanism (19) for transmitting to the front section (4) a rotational movement of the rear section (6) produced by a steering wheel (12), a fixed block (16) for the mounting of a central cushion (64) in order to maintain it fixed in rotation when the steering shaft turns, the gear mechanism comprising an intermediate toothed member (24) meshing with a front toothed member (20) of the front section (4) of the steering shaft and with a rear toothed member (22) of the rear section (6) of the steering shaft, the steering column assembly further comprising means for the radial maintenance of the intermediate toothed member (24) against the teeth of the front and rear toothed members (20, 22), the maintenance means comprising a return member (58), **characterised in that** the maintenance means comprise a ramp surface mechanism (44, 46, 48, 50) for converting a longitudinal component of a force produced by the return member into a radial force for returning the intermediate toothed member (24) against the front toothed member (20) and the rear toothed member (22).

2. Assembly according to claim 1, **characterised in that** the ramp surface mechanism comprises a support (36) for the intermediate toothed member (24) received in a manner movable radially relative to the fixed block (16).

3. Assembly according to claim 2, **characterised in that** said ramp surface mechanism has a pair of first ramp surfaces (44, 46) which are each located at one end of the support (36) for the intermediate toothed member and are oppositely inclined relative to the longitudinal direction, the fixed block having a pair of second ramp surfaces (48, 50) which are oppositely inclined relative to the longitudinal direction and are each in contact with a first ramp surface (44, 46), and **in that** the ramp surfaces (44, 46; 48, 50) of one of the pairs of ramp surfaces are movable longitudinally relative to one another under the action of the return member.

4. Assembly according to claim 3, **characterised in that** the ramp surface mechanism comprises a stop (60) for limiting the relative longitudinal displacement of said ramp surfaces in the direction corresponding to a removal of the intermediate toothed member (24) from the teeth of the front toothed member (20) and the rear toothed member (22).

5. Assembly according to claim 3 or 4, **characterised in that** the return member (58) rests on at least one element (52; 110, 112) carrying one of the ramp surfaces that are movable relative to one another.

6. Assembly according to claim 5, **characterised in that** the ramp surfaces that are movable relative to one another are the first ramp surfaces (44, 46), and **in that** the support (36) for the intermediate toothed member comprises at least two parts (110, 112) which are movable longitudinally relative to one another and each of which carries one of the first ramp surfaces and on which the return member (58) rests.

7. Assembly according to claim 5, **characterised in that** the ramp surfaces that are movable relative to one another are the second ramp surfaces (48, 50), and **in that** one of the second ramp surfaces (50) is carried by a pusher (52) of the fixed block (16), the pusher being movable longitudinally under the action of the return member (58).

8. Assembly according to any one of claims 1 to 7, **characterised in that** the return member is a compression spring (58) arranged longitudinally.

9. Assembly according to any one of claims 1 to 8, **characterised in that** the front and rear toothed members comprise internally toothed sleeves (22, 28), and **in that** the intermediate toothed member is a pinion (24) arranged inside the front and rear toothed members and meshing therewith.
